**Europäisches Patentamt**

**European Patent Office**

**Office européen des brevets**

(19)

(11) Publication number : **0 389 364 B1**

(12) **EUROPEAN PATENT SPECIFICATION**

(45) Date of publication of patent specification :
07.09.94 Bulletin 94/36

(51) Int. Cl.⁵ : **G06K 15/10, B41J 2/485**

(21) Application number : **90400769.7**

(22) Date of filing : **20.03.90**

(54) **Method and apparatus for controlling print overlay for a printing device.**

(30) Priority : **20.03.89 JP 68651/89**

(43) Date of publication of application :
**26.09.90 Bulletin 90/39**

(45) Publication of the grant of the patent :
**07.09.94 Bulletin 94/36**

(84) Designated Contracting States :
**DE FR GB**

(56) References cited :
**DE-A- 3 004 786**
**DE-A- 3 231 086**
**DE-A- 3 233 509**

(73) Proprietor : **FUJITSU LIMITED**
**1015, Kamikodanaka**
**Nakahara-ku**
**Kawasaki-shi Kanagawa 211 (JP)**

(72) Inventor : **Fujii, Katuyasu**
**1-21, Takamatsu-cho**
**Tachikawa-shi, Tokyo 190 (JP)**

(74) Representative : **Joly, Jean-Jacques et al**
**Cabinet Beau de Loménie**
**158, rue de l'Université**
**F-75340 Paris Cédex 07 (FR)**

## Description

Background of the Invention

This invention relates to an image overlay printing control method and apparatus for a printer for carrying out image overlay printing in an overlapping relationship with characters, or independently.

A printer which is connected to and used with a personal computer or a word processor normally has a function for carrying out image overlay printing on characters in order to attract attention to a portion to be emphasized. Normally, image overlay data are produced by a personal computer or a word processor to which a printer is connected and the printer carries out image overlay printing in accordance with a command from such apparatus. However, some personal computers or word processors do not have a function of image overlay printing, and when printing is to be carried out by a printer connected to such personal computer or word processor, the lack of image overlay printing function is inconvenient. Thus, there has been proposed a printer with a built-in image overlay printing function.

Such a printer includes an image overlay data storage section in which are stored basic image overlay data for a predetermined total number of columns and a section for controlling image overlay printing. Operation of the above printer involves designating the number of columns (a start column and an end column) for a given print line along which image overlay printing is to be effected. The image overlay controlling section then successively reads out basic image overlay data from the image overlay storage section and transfers these to a line buffer until the designated column is reached. After image overlay data for a required number of columns have been introduced into the line buffer, a printing control section controls a print head to carry out image overlay printing.

This conventional image overlay printing controlling has the following problem. Since basic image overlay data relating to a predetermined total number of columns are read out successively, starting from the normal head position, image overlay printing of a first designated print line will be initially carried out, and then image overlay printing for the following print line, say, may well be started from a different column position. This causes image overlay patterns for the adjacent upper and lower print lines to become discontinuous at boundary portions, with the result that image overlay patterns are not linked between the upper and lower print lines.

Summary of the Invention

Accordingly, it is an object of the present invention to provide an image overlay printing controlling apparatus for a printer which can carry out image overlay printing wherein patterns are continuous (i.e. free of undesired discontinuities from one line to the other) even if starting positions of image overlay printing area are different between adjacent upper and lower print lines.

It is another object of the present invention to provide an image overlay printing control method for a printer which can achieve image overlay printing wherein patterns are continuous even if the starting positions of image overlay printing pattern are different between adjacent upper and lower print lines.

In accordance with an aspect of the present invention, there is provided an image overlay printing controlling apparatus for a printer fed with print data stored in a buffer, comprising: image overlay storage means containing basic image overlay data for a predetermined total number of columns stored therein; calculating means, operative when at least one pair of adjacent upper and lower lines are to contain image overlay printing therein with continuity between said lines and said lines have different start column numbers, to calculate a value C defined as the remainder obtained when the start column number of the lower print line is divided by the said predetermined total number of columns in the basic image overlay data, said value C determining an image overlay data extraction starting position; and image overlay controlling means for beginning extraction of data from a column of basic image overlay data designated by the value of said remainder C calculated by said calculating means and for producing a print command after all the extracted data have been stored into the buffer.

In accordance with another aspect of the present invention, there is provided an image overlay printing control method for a printer which prints using print data stored in a buffer, comprising the steps of:

storing basic image overlay data for a predetermined total number of columns into an image overlay storage means;

calculating, when at least one pair of adjacent upper and lower lines are to contain image overlay printing thereon with continuity between said lines and said lines have different start column numbers, a value C defined as the remainder obtained when the start column number of the lower print line is divided by the said predetermined total number of columns in the basic image overlay data, said value C determining an image overlay data extraction starting position;

starting extraction of data from a column of the basic image overlay data designated by the value of the remainder C and producing a printing command after the extracted data are all stored into said buffer.

Brief Description of the Drawings.

FIG. 1 is a perspective view of a wire dot printer to which the present invention can be applied;

FIG. 2 is a block diagram showing the construction of a conventional controlling apparatus;

FIG. 3 is a diagram showing a conventional image overlay printing controlling method;

FIG. 4A is a diagram showing the discontinuity of a mesh pattern between an upper print line and a lower print line printed in accordance with the conventional image overlay printing controlling method;

FIG 4B is a similar view but illustrating discontinuity of a stripe pattern between an upper print line and a lower print line printed in accordance with the conventional image overlay printing controlling method;

FIG. 5 is a block diagram illustrating a principle of construction of a controlling apparatus of the present invention;

FIG. 6 is a diagram showing a principle of a controlling method of the present invention;

FIG. 7 is a block diagram showing a controlling apparatus of an embodiment of the present invention;

FIG. 8 is a block diagram showing detailed construction of the controlling apparatus of FIG. 7;

FIG. 9 is a diagram showing an image overlay printing controlling method employed in the controlling apparatus of FIG. 7; and

FIG. 10 is a diagram showing a mesh pattern obtained by continuous image overlay printing between adjacent two print lines in accordance with the controlling method of the present invention.

## Description of the Preferred Embodiment

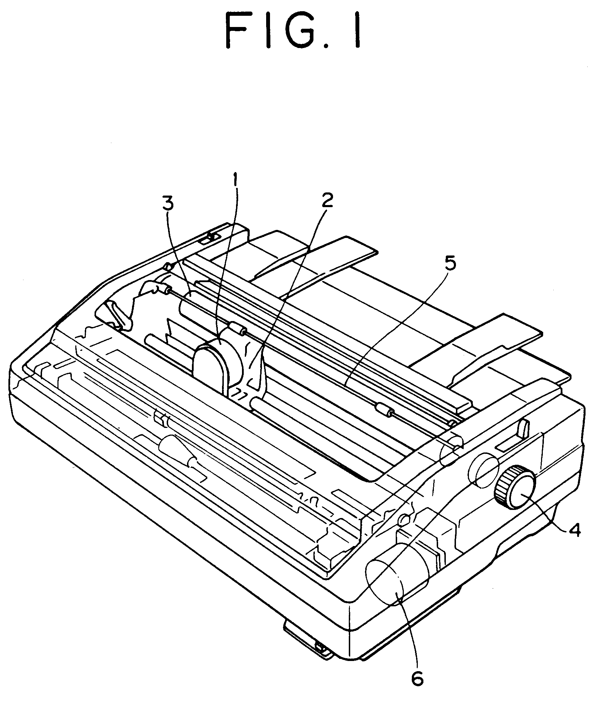

Referring to FIG. 1. there is shown in perspective view a wire dot printer to which the present invention can be applied. Reference numeral 1 denotes a print head for carrying out printing. The print head 1 is mounted on a carriage 2 which is driven by a carriage motor 6. Reference numeral 3 denotes a platen, and 4 a platen knob for rotating the platen 3. Reference number 5 denotes a bail bar for holding paper. The present invention can be applied not only to a wire dot printer as shown in FIG 1, but also to other common dot printers such as a thermal printer and an ink jet printer.

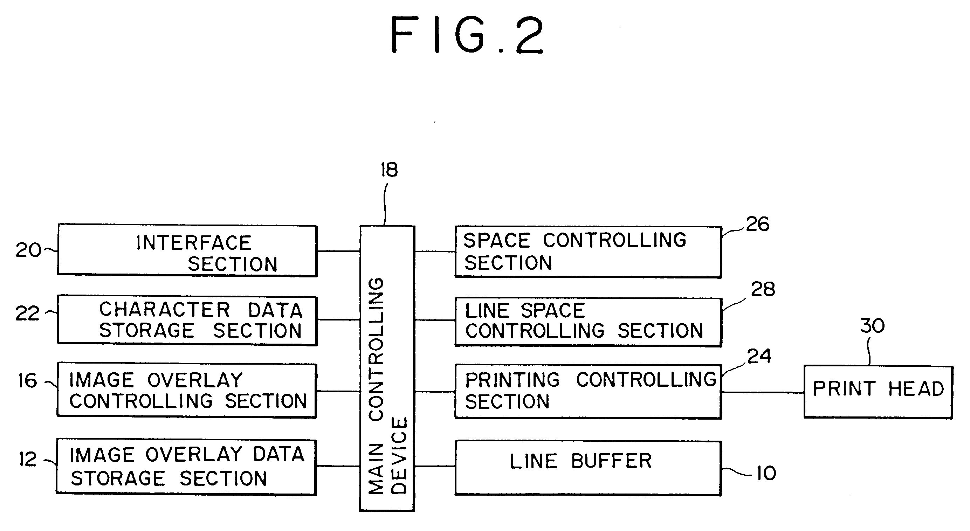

A conventional image overlay printing control method and apparatus will now be described with reference to FIGS 2 to 4B. The printing controlling apparatus includes a main processing unit (MPU) 18 for controlling internal processing operations, an interface section 20 for communicating with the outside, a character data storage section 22 having predetermined character dot patterns stored therein, a printing controlling section 24 for controlling operation of printing processing, a space controlling section 26 for controlling a spacing operation upon printing processing, a line space controlling section 28 for controlling a line spacing operation, a line buffer 28 for storing print data therein, and a print head 30 for printing print data stored in the line buffer 10 under the control of the printing controlling section 24.

For the image overlay printing, the printing controlling apparatus further includes an image overlay data storage section 12 containing basic image overlay data 100 covering a total of 10 columns, say, and an image overlay controlling section 16 controlling image overlay printing.

When a number of columns (a start column and an end column) for a print line for which image overlay printing is to be effected is designated, the image overlay controlling section 16 reads out the basic image overlay data 100 from the image overlay data storage section 12 and transfers them to the line buffer 10 a determined number of times required to reach the designated column number. Then, after image overlay data for the required number of columns are obtained in the line buffer 10, the printing controlling section 24 controls the print head 30 to carry out image overlay printing.

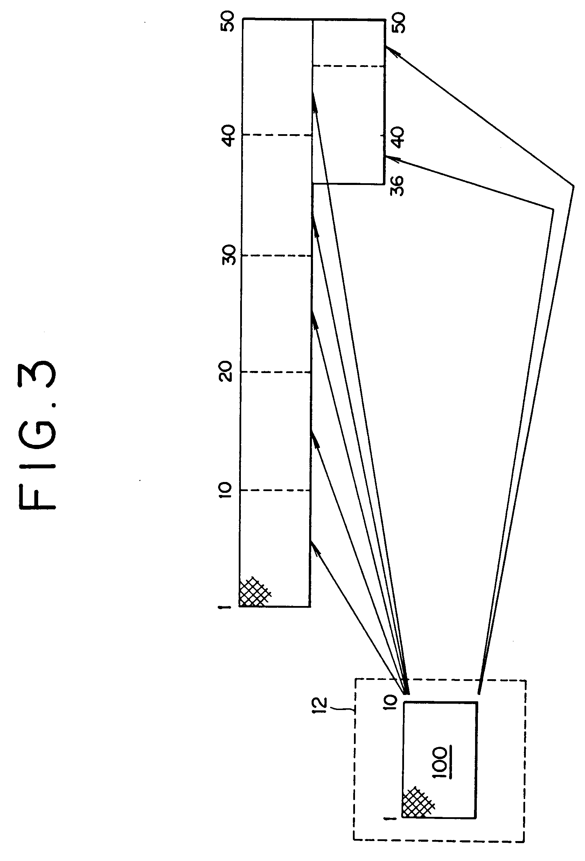

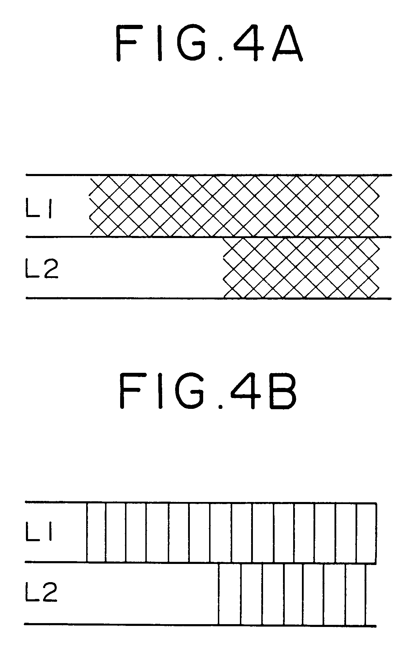

However, in such image overlay printing based on a conventional printing controlling method, there arises the following problem: if image overlay printing is effected first for a designated print line L1 and then image overlay printing is started from a different column position for an adjacent next print line L2 (as seen in FIG 3), then image overlay patterns of the upper print line L1 and the lower print line L2 will be discontinuous at boundary portions thereof. Accordingly, there is a drawback in that image overlay patterns of adjacent upper and lower print lines are not linked to each other, as can be seen from FIGS 4A and 4B.

This problem will now be analyzed in more detail with reference to FIG. 3 again. It is here assumed that each column has a one-dot width and that the designated image overlay printing is effected e.g. from the first column to the 50th column for the upper print line L1. Image overlay data for such image overlay print will then be produced as follows. Since the basic image overlay data 100 for the total column number A = 10 are stored in the image overlay data storage section 12, the basic image overlay data 100 will be transferred five times to the line buffer 10 and arranged along a print line.

Then, if it is assumed that image overlay printing from the 36th column to the 50th column is designated for the subsequent lower print line L2, the basic image overlay data 100 for the total column number A = 10 will be transferred in a similar fashion from the image overlay data storage section 12 to the line buffer 10, but will in this case be allotted to the 36th column, so spanning to the 45th column. In the next transfer, the basic image overlay data 100 for 5 columns from the head will be allotted to the 46th column reaching to the 50th column.

As a result, the column positions of the basic image overlay data 100 which confront on the upper and lower sides on the boundary portions of the upper and lower print lines from the 36th column to the 50th column will be different from each other, as seen from the following table giving the relative dot positions of the basic overlay data for lines L1 and L2 respectively:

L1: "6. 7. 8. 9. 10. 1. .... 10"
L2: "1. 2. 3. 4. 5. 6. .... 4"

Accordingly, the image overlay patterns of the upper and lower print lines are not linked, as can be seen in FIGS. 4A and 4B.

The present invention solves this problem of prior art print data control.

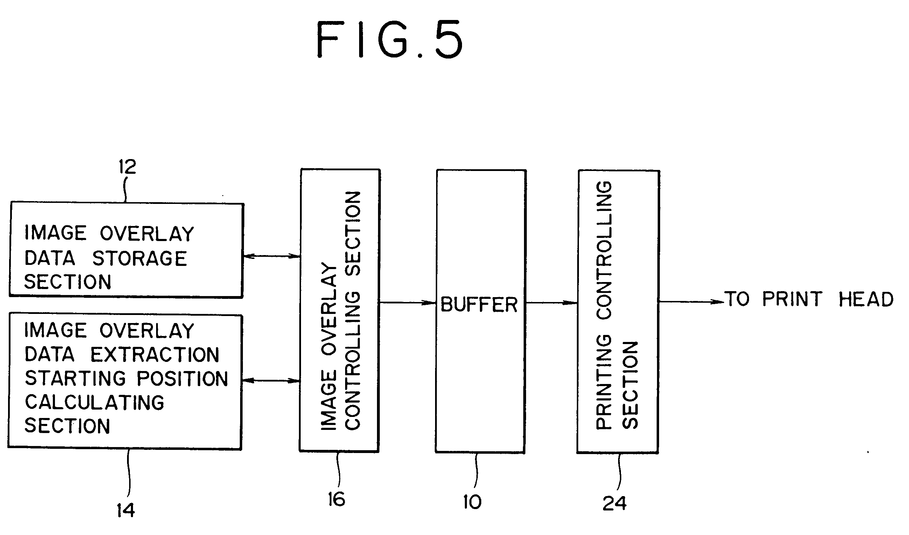

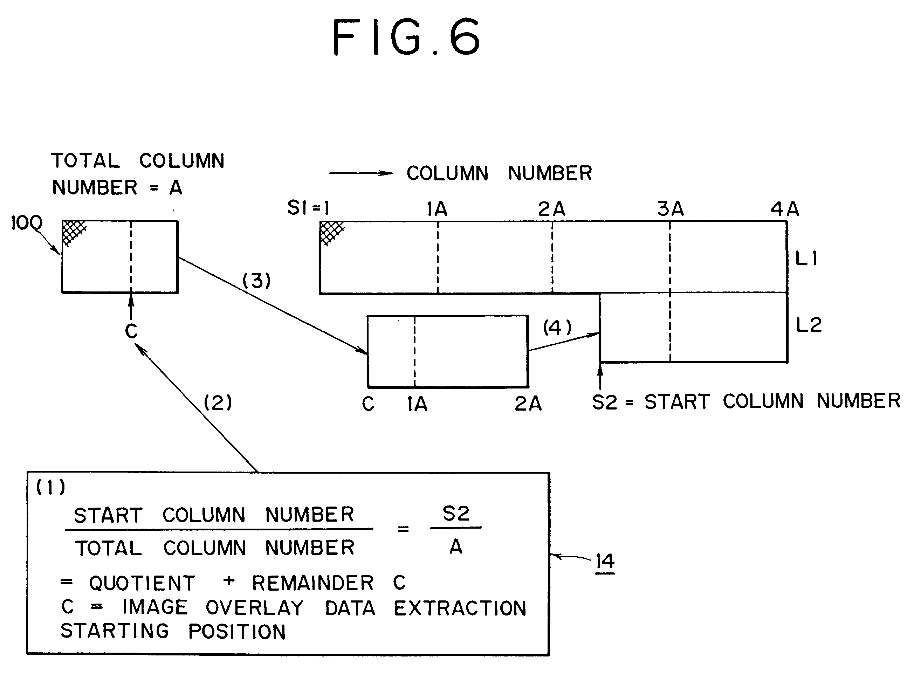

The present invention will now be described in detail with reference to FIGS 5 to 10.

The main functional units of the printing controlling apparatus according to one embodiment of the present invention are shown in a block diagram of FIG. 5. This embodiment is directed to a dot printer operating from print data stored in a buffer 10. The printing controlling apparatus includes an image overlay data storage section 12 containing basic image overlay data 100 covering a total number of columns equal to "A" and a calculating section 14 - operative in cases where image overlay start columns for at least one pair of adjacent upper and lower printing lines are different from each other and yet need to appear continuous -to determine a remainder C for a quotient expressed as (start column number)/(total number of columns in the basic image overlay data) = S2/A. This remainder C serves to provide an image overlay extraction starting position.

Then, the image overlay controlling section 16 extracts the basic image overlay data 100 starting from a column of the latter designated by the value C, as calculated by the above calculating section 14, and stores the thus-extracted basic image overlay data 100 into the buffer 10. This process is carried out for as many pairs of adjacent upper and lower print lines as necessary. The printing control section 24 then develops a command to a print head to carry out printing. This controlled printing will then yield printed image overlay patterns for a plurality of print lines which are continuous in the upward and downward directions. In this manner, according to the present invention, even if image overlay start columns are different between adjacent upper and lower lines, image overlay patterns can still be linked at boundary portions of the print lines with certainty, and the quality of image overlay print can be improved significantly.

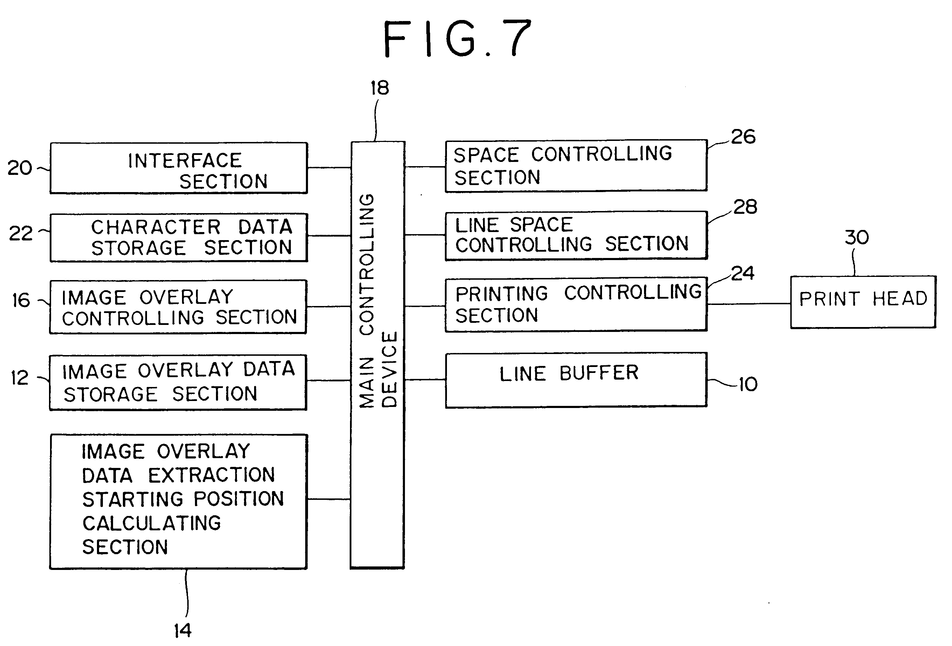

An embodiment of the present invention based on the principle above described will be described with reference to FIGS. 7 to 9.

A controlling apparatus for a printer according to an embodiment of the present invention comprises a main processing unit (MPU) 18 for internal processing control, an interface controlling section 20 for communicating with the outside, a character data storage section 22 containing predetermined character dot patterns, a printing controlling section 24 for controlling the printing processing, a space controlling section 26 for controlling the spacing during printing processing, a line space controlling section 28 for controlling the line spacing, a line buffer 10 for storing print data, and a print head 30 for printing print data stored in the line buffer 10 under the control of the printing controlling section 24.

In addition to these components, the controlling apparatus also comprises the following functional elements dedicated to image overlay printing: an image overlay data storage section 12, a calculating section 14 for determining an image overlay data extraction starting position, and an image overlay controlling section 16.

The image overlay data storage section 12 contains basic image overlay data 100, i.e. the basic data for the image overlay printing. The total number "A" of columns of such basic image overlay data 100 is e.g. equal to 10. Accordingly, the image overlay controlling section 16 iteratively transfers from the image overlay data storage section 12 to the line buffer 10 the basic image overlay data 100 a number of times corresponding to the number of image overlay columns in accordance with a start column and an end column. Then, after image overlay data for a designated image overlay area are thus prepared in the line buffer 10, the printing controlling section 24 controls the print head 30 to carry out image overlay printing in accordance with the image overlay data stored in the line buffer 10.

While the image overlay data storage section 12 and the image overlay controlling section 16 are similar in construction and function to those of the conventional controlling apparatus shown in FIG. 2, the controlling apparatus of the present invention further includes a calculating section 14 for determining the image overlay data extraction starting position. The calculating section 14 determines from which column of the basic image overlay data 100 stored in the image overlay data storage section 12 extraction of data is to be started.

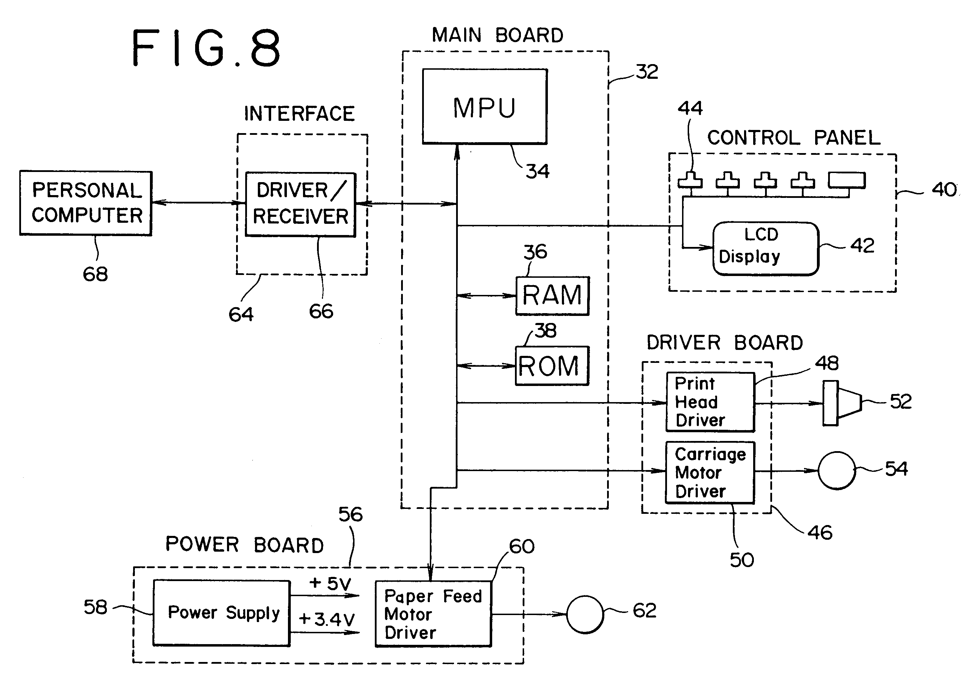

FIG. 8 shows the general construction of the printer including the controlling apparatus of the embodiment of the present invention shown in FIG. 7. A main board 32 includes an MPU 34, a RAM 36 and ROM 38. The MPU 34 substantially corresponds to the main processing unit 18 of FIG. 7 and includes the other controlling sections such as the image overlay controlling section 16, printing controlling section 24 and so forth. The ROM 38 includes the image overlay data storage section 12 and character data storage section 22 of FIG. 7. The RAM 36 includes the line buffer 10.

A control panel 40 has an LCD display 42 and a plurality of key switches 44 provided thereon. A driver board 46 includes a print head driver 48 and a carriage motor driver 50 for driving a print head 52 and a carriage motor 54, respectively. A power board 56 includes a power supply 58 for supplying a power to the printer, and a paper feed motor driver 60 for driving a paper feed motor 62. The printer, including the controlling apparatus of the present invention, is connected to a personal computer 68 by way of an interface 64.

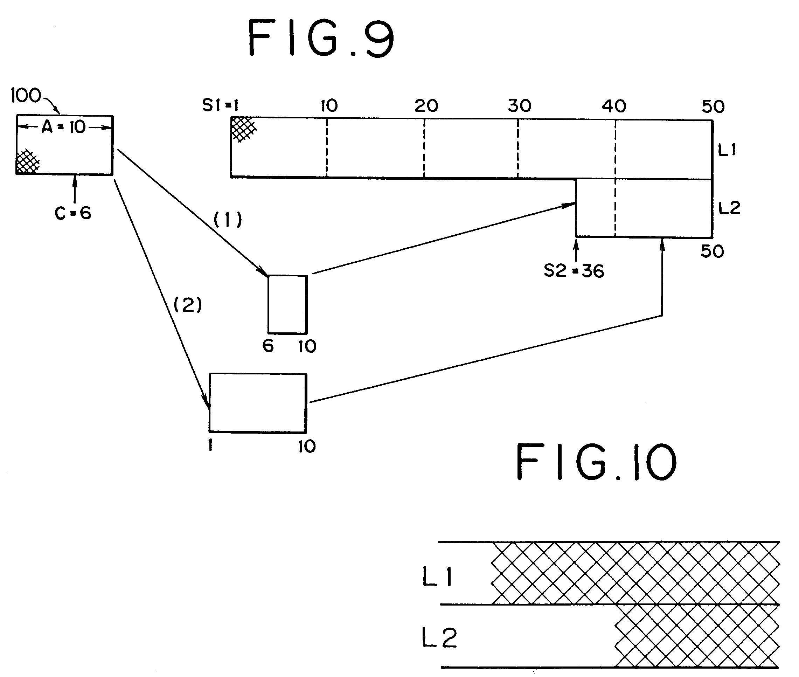

A principle of calculation by the image overlay data extraction starting position calculating section 14 will now be described with reference to FIG. 9.

FIG. 9 illustrates a situation in which image overlay printing is first effected from the first column to the 50th column for an upper print line L 1 and then image overlay printing is effected for the 36th column to the 50th column for a next print line L2. This therefore means that the start columns of the pair of image overlay print lines are S1 = 1 and S2 = 36 and thus different from each other between the upper and lower print lines.

When image overlay printing is to be carried out for the lower print line L2 of the set of upper and lower print lines L1 and L2 in which the start columns for image overlay printing are different from each other, the calculating section of FIG 7, serving to determine the starting position of the extracted image overlay data, starting position performs the following calculation:

(start column number S2)/(total number of columns A) = quotient + remainder C    (1)

where A is a total number of columns of the image basic overlay data 100 and S2 is a start column of the lower print line, thereby obtaining a value C which indicates from which column of the basic image overlay data 100 extraction of data is to be started. In particular, the value C of the remainder indicates from which column of the basic image overlay data 100 extraction of data is to be started, and is calculated for column S2 - from which image overlay printing is to be started - by dividing that column number by the total column number A of the basic image overlay data 100.

Referring again to FIG. 7, the value C, calculated by the calculating section 14 determining the image overlay data extraction starting position, is transmitted to the image overlay controlling section 16. The image overlay controlling section 16 thus starts extraction of data from that column position of the basic image overlay data 100 stored in the image overlay data storage section 12 which is provided by the calculated value C, and the thus-extracted data are transferred to the line buffer 10.

The operation of the embodiment of FIG. 7 will now be described more in detail using the specific values as shown in FIG. 9.

It is now assumed that the total number of columns A of the basic image overlay data 100 stored in the image overlay data storage section 12 is 10, and that image overlay printing is effected initially from the first column to the 50th column for the upper print line L1 and then from the 36th column to the 50th column for the adjacent lower print line L2.

Here, since the total column number A of the image overlay basic data is 10 and the start column S2 for the lower print line L2 is 36, the calculating section 14 calculates a remainder C = 6 in accordance with the expression (1) above. The calculated value C represents an image overlay data extraction starting position. Thus, the image overlay controlling section 16 receives the calculated value C = 6 from the calculating section 14 and starts extraction of data from the sixth column of the basic image overlay data 100 designed by the calculated value C, as indicated by an arrow mark (1), in FIG. 9. The thus-extracted data are stored into the line buffer 10 so that image overlay data are allotted from the 36th column to the 40th column. Then, for the remaining 10 columns from the 41st column to the 50th column, the basic image overlay data 100 are extracted as they are from the head position as indicated by another arrow mark (2) in FIG. 9 and are transferred to the line buffer 10 so as to be allotted to the 41st column up to the 50th column.

As a result, an array of data at boundary portions from the 36th column to the 50th column where image overlay prints of the upper print line L1 and the lower print line L2 overlap each other is such that when represented by column numbers of the basic image overlay data 100, it appears as follows:

L1: "6. 7. 8. 9. 10. 1. .... 10"
L2: "6. 7. 8. 9. 10. 1. .... 10"

Consequently, the basic image overlay data 100 which have the same column positions matchedly confront each other along the image overlay boundary between the upper and lower print lines, thereby linking the image overlay patterns continuously to each other. A print pattern obtained in accordance with the controlling method of the present invention using a mesh pattern as an image overlay pattern is shown in FIG. 10.

It is to be noted that while in the embodiment described above the total number A of the basic image overlay data 100 is 10, the present invention is in no way restricted to such specific number.

The present invention thus makes it possible to have image overlay patterns that are continuously linked with certainty at boundary portions of the upper and lower lines, even where image overlay start columns between adjacent upper and lower print lines are different. Consequently, the quality of image overlay print can be improved signficantly.

**Claims**

1.   An image overlay printing controlling apparatus for a printer fed with print data stored in a buffer (30) comprising:

image overlay storage means (12) containing basic image overlay data (100) for a predetermined total number (A) of columns stored therein;

calculating means (14), operative when at least one pair of adjacent upper and lower lines (L1, L2) are to contain image overlay printing thereon with continuity between said lines (L1, L2) and said lines (L1, L2) have different start column numbers (S1, S2), to calculate a value C defined as the remainder obtained when the start column number (S2) of the lower print line (L2) is divided by the said predetermined total number (A) of columns in the basic image overlay data (100), said value C determining an image overlay data extraction starting position; and

image overlay controlling means (16) for beginning extraction of data from a column of basic image overlay data (100) designated by the value of said remainder C calculated by said calculating means (14) and for producing a print command after all the extracted data have been stored into the buffer (10).

2. An image overlay printing control method for a printer which prints using print data stored in a buffer (10), comprising the steps of :

storing basic image overlay data (100) for a predetermined total number (A) of columns into an image overlay storage means (12);

calculating, when at least one set of adjacent upper and lower lines (L1, L2) are to contain image overlay printing thereon with continuity between said lines (L1, L2) and said lines (L1,L2) have different start column numbers (S1, S2), a value C defined as the remainder obtained when the start column number (S2) of the lower print line (L2) is divided by the said predetermined total number (A) of columns in the basic image overlay data (100), said value C determining an image overlay data extraction starting position;

starting extraction of data from a column of the basic image overlay data designated by the value of the remainder C; and

producing a printing command after the extracted data are all stored into said buffer (10).

**Patentansprüche**

1. Eine Bildüberlagerungsdrucksteuervorrichtung für einen Drucker, dem Druckdaten zugeführt werden, die in einem Puffer (10) gespeichert sind, die umfaßt:

ein Bildüberlagerungsspeichermittel (12), das Bildüberlagerungsgrunddaten (100) für eine vorbestimmte Gesamtanzahl (A) von darin gespeicherten Spalten enthält;

ein Berechnungsmittel (14), das operativ ist, wenn wenigstens auf einem Paar von benachbarten oberen und unteren Zeilen (L1, L2) ein Bildüberlagerungsdrucken mit Zusammenhang zwischen den genannten Zeilen (L1, L2) enthalten sein soll und die genannten Zeilen (L1, L2) verschiedene Startspaltennummern (S1, S2) haben, um einen Wert C zu berechnen, der als Rest definiert ist, der erhalten wird, wenn die Startspaltennummer (S2) der unteren Druckzeile (L2) durch die genannte vorbestimmte Gesamtanzahl (A) von Spalten in den Bildüberlagerungsgrunddaten (100) geteilt wird, welcher Wert C eine Bildüberlagerungsdatenextraktionsstartposition bestimmt; und

ein Bildüberlagerungssteuermittel (16) zum Beginnen einer Extraktion von Daten an einer Spalte der Bildüberlagerungsgrunddaten (100), die durch den Wert des genannten Rests C bezeichnet ist, der durch das genannte Berechnungsmittel (14) berechnet wurde, und zum Erzeugen eines Druckbefehls, nachdem alle extrahierten Daten in den Puffer (10) gespeichert worden sind.

2. Ein Bildüberlagerungsdrucksteuerverfahren für einen Drucker, der unter Verwendung von Druckdaten druckt, die in einem Puffer (10) gespeichert sind, mit den Schritten:

Speichern von Bildüberlagerungsgrunddaten (100) für eine vorbestimmte Gesamtanzahl (A) von Spalten in ein Bildüberlagerungsspeichermittel (12);

Berechnen eines Wertes C, wenn wenigstens ein Satz von benachbarten oberen und unteren Zeilen (L1, L2) ein Bildüberlagerungsdrucken mit Zusammenhang zwischen den genannten Zeilen (L1, L2) enthalten soll und die genannten Zeilen (L1, L2) verschiedene Startspaltennummern (S1, S2) haben, der als der Rest definiert ist, der erhalten wird, wenn die Startspaltennummer (S2) der unteren Druckzeile (L2) durch die genannte vorbestimmte Gesamtanzahl (A) von Spalten in den Bildüberlagerungsgrunddaten (100) geteilt wird, welcher Wert C eine Bildüberlagerungsdatenextraktionsstartposition bestimmt;

Starten einer Extraktion von Daten an einer Spalte der Bildüberlagerungsgrunddaten, die durch den Wert des Restes C bezeichnet ist; und

Erzeugen eines Druckbefehls, nachdem die extrahierten Daten alle in den genannten Puffer (10) gespeichert sind.

## Revendications

1. Appareil de commande d'impression de superposition de motif pour imprimante recevant des données d'impression qui sont mémorisées dans un tampon (10), comprenant :

un moyen (12) de mémorisation de superposition de motif, qui contient des données de base de superposition de motif (100) mémorisant un nombre total prédéterminé (A) de colonnes ;

un moyen de calcul (14), intervenant lorsqu'au moins une paire de lignes supérieure et inférieure adjacentes (L1, L2) doivent contenir une impression de superposition de motif qui présente une continuité entre lesdites lignes (L1, L2) et que lesdites lignes (L1, L2) ont des numéros de colonne de début (S1, S2) différents afin de calculer une valeur C définie comme étant le reste obtenu lorsqu'on divise le numéro de colonne de début (S2) de la ligne d'impression inférieure (L2) par ledit nombre total prédéterminé (A) de colonnes contenues dans les données de base de superposition de motif (100), ladite valeur C déterminant une position de début d'extraction de données de superposition de motif ;

et un moyen (16) de commande de superposition de motif servant à faire commencer l'extraction de données à partir d'une colonne des données de base de superposition de motif (100) qui est désignée par la valeur dudit reste C calculée par ledit moyen de calcul (14) et à produire une instruction d'impression après que toutes les données extraites ont été mémorisées dans le tampon (10).

2. Procédé de commande d'impression de superposition de motif pour imprimante qui imprime à l'aide de données d'impression mémorisées dans un tampon (10), comprenant les opérations suivantes :

mémoriser des données de base de superposition de motif (100) se rapportant à un nombre total prédéterminé (A) de colonnes dans un moyen (12) de mémorisation de superposition de motif ;

calculer, lorsqu'au moins un groupe de lignes supérieure et inférieure adjacentes (L1, L2) doivent contenir une impression de superposition de motif présentant une continuité entre lesdites lignes (L1, L2) et que lesdites lignes (L1, L2) ont des numéros de colonne de début (S1, S2) différents, une valeur C définie comme étant le reste obtenu lorsqu'on divise le numéro (S2) de la colonne de début de la ligne d'impression inférieure (L2) par ledit nombre total prédéterminé (A) de colonnes contenues dans les données de base de superposition de motif (100), ladite valeur C déterminant une position de début d'extraction de données de superposition de motif ;

commencer l'extraction de données à partir de la colonne des données de base de superposition de motif qui est désignée par la valeur du reste C ;

et produire une instruction d'impression après que les données extraites ont toutes été mémorisées dans ledit tampon (10).

# FIG. 1

# FIG.2

EP 0 389 364 B1

```
20 ─ INTERFACE
        SECTION

22 ─ CHARACTER DATA
     STORAGE  SECTION

16 ─ IMAGE OVERLAY
     CONTROLLING SECTION

12 ─ IMAGE OVERLAY DATA
     STORAGE SECTION
```

18

MAIN CONTROLLING DEVICE

```
SPACE CONTROLLING          26
SECTION

LINE SPACE                 28
CONTROLLING SECTION

PRINTING CONTROLLING       24
SECTION

LINE BUFFER
                           10
```

30

PRINT HEAD

# FIG.3

EP 0 389 364 B1

# FIG.4A

# FIG.4B

# FIG.5

IMAGE OVERLAY DATA STORAGE SECTION 12

IMAGE OVERLAY DATA EXTRACTION STARTING POSITION CALCULATING SECTION 14

IMAGE OVERLAY CONTROLLING SECTION 16

BUFFER 10

PRINTING CONTROLLING SECTION 24

TO PRINT HEAD

# FIG.6

TOTAL COLUMN
NUMBER = A

$\longrightarrow$ COLUMN NUMBER

100

S1 = 1        1A        2A        3A        4A

L1

L2

(3)

(4)

C

(2)

C    1A        2A

S2 = START COLUMN NUMBER

(1)

$$\frac{\text{START COLUMN NUMBER}}{\text{TOTAL COLUMN NUMBER}} = \frac{S2}{A}$$

= QUOTIENT + REMAINDER C
C = IMAGE OVERLAY DATA EXTRACTION
STARTING POSITION

14

EP 0 389 364 B1

# FIG.7

EP 0 389 364 B1

# FIG.8

**CONTROL PANEL** 40

44 — LCD Display 42

**MAIN BOARD** 32

MPU 34

RAM 36

ROM 38

**DRIVER BOARD** 46

48 — Print Head Driver 52

Carriage Motor Driver 50 — 54

**INTERFACE** 64

DRIVER / RECEIVER 66

PERSONAL COMPUTER 68

**POWER BOARD** 56

Paper Feed Motor Driver 60 — 62

Power Supply 58 — +5V +3.4V

# FIG.9

# FIG.10

EP 0 389 364 B1